# EUROPEAN PATENT APPLICATION

(11) **EP 3 494 785 A2**
(43) Date of publication of application: **12.06.2019**
(21) Application number: 18211453.8
(22) Date of filing: 10.12.2018
(51) Int. Cl.: A01K 63/04, A01K 61/60

(54) **GAS FLOW CONTROL SYSTEM AND METHOD OF USE THEREOF**

(30) Priority: 08.12.2017 US 201762596536 P
(71) Applicant: Pentair Aquatic Eco-Systems, Inc., Apopka, FL 32703 (US)
(72) Inventor: MARCHAND, Kevin, Duncan BC, V9L 1L7 (CA); HOSLER, KC, Nanaimo BC, V9S 5L8 (CA); WHITE, Jason, Nanaimo BC, V9S 3N9 (CA)
(74) Representative: Barker Brettell LLP

(57) **Abstract**

Embodiments of the invention provide a control panel (14) for use in an aquaculture system (10). The control panel comprises an input line (38), a plurality of output lines (40), a plurality of flow measurement components (106) that include an orifice, and a plurality of flow adjustment components. Further, the flow measurement components measure the flowrate in the plurality of output lines using orifice differential pressure and the flow adjustment components adjust the flowrate in the plurality of output lines. Further embodiments described herein provide a method for measuring the flowrate of an outlet line from a control panel. The method comprises the steps of measuring a pressure of an inlet, measuring a first numeral corresponding to a flowrate of an outlet, and determining from the pressure of the inlet and the first numeral, a flowrate of the outlet.

## Description

### RELATED APPLICATIONS

This application claims the benefit of, and priority to, U.S. provisional patent application no. 62/596,536, filed December 8, 2017, which is incorporated herein by reference.

### BACKGROUND

Gas and fluid distribution systems are common in many industries for assistance in the circulation of gas or fluid within a respective process, along with assisting in the supply of a gas or fluid to the respective process and/or the removal of a gas or fluid from the respective process. In such processes, the distribution of such gases may be controlled using control systems that may operate using a control panel, among other instruments.

Aquaculture systems and technologies is one example of a process that may utilize gas distribution systems. Aquaculture may generally be defined as a process that aims to farm or grow aquatic organisms including fish, mollusks, crustaceans, aquatic plants, and the like in a controlled environment. Such aquaculture systems may be located in facilities on land or in natural bodies of water, e.g., lakes or oceans. For example, one such type of system is offered by Pentair Aquatic Eco-Systems® and is designed to sustain aquatic life, including cold-water aquaculture systems and warm-water aquaculture systems. Two particular examples of the systems offered by Pentair include a Sea Pen Aeration (SPA) system, which is designed to mitigate issues related to toxic plankton blooms, temperature stratification, poor mixing, and low dissolved oxygen levels, and a Sea Pen Oxygen (SPO) system, which is designed to mitigate issues related to low dissolved oxygen levels.

In such aquaculture systems, maintaining healthy water conditions for the particular aquatic organisms within the system is vital to the productivity of the system. In order to maintain healthy water conditions, it may be desirable to control water temperature and/or the amount of algae or gas (e.g., air or oxygen) within the aquaculture environment, along with controlling the spread of disease and/or the disposal of waste that may be present within the aquaculture environment.

In some systems, maintaining the appropriate conditions for aquaculture systems and, in particular, controlling the amount of gas or fluid distributed to the aquaculture systems may be difficult. For example, access to the systems and/or control panels may be difficult or limited as the systems may be located within bodies of water. As such, there is a need for control systems that allow for controlling gas or other fluids supplied to the systems. Further, such aquaculture systems may contain differing aquaculture organisms in multiple aquaculture pens that are designed to operate at different conditions within the separate pens. Therefore, it may be useful to provide a control system that allows for the control of individual systems (e.g., pens, individual systems within a given pen, and/or the like) within the aquaculture system.

Moreover, gas or fluid flow panels are typically factory calibrated and, in most instances, calibrated for a specific supply pressure for which the gas or fluid is provided into the system. However, many gas or fluid distribution systems are variable. For example, the supply pressure may change during operation and, as a result, the supply pressure may not match the pressure under which the control panel was calibrated. If inconsistencies occur, the indicated flow from the control panel may be erroneous. As such, a control panel that allows for accurate flow readings at varying conditions would be useful.

### SUMMARY

In accordance with an aspect of the present invention there is provided an aquaculture system as defined in claim 1. In accordance with another aspect of the present invention there is provided a control panel, for use in an aquaculture system, as defined in claim 2. In accordance with another aspect there is provided a control panel, that of the previous aspect or otherwise, for use in the aquaculture system of claim 1. In accordance with another aspect, there is provided a an aquaculture system comprising one or more pens, one or more compressors, a control site and one or more control panels as are defined in any of claims 2 to 8. In accordance with another aspect there is provided a method for measuring a flowrate of an outlet line from a control panel as defined in claim 9. In accordance with another aspect there is provided a method for measuring a flowrate of an outlet line from the control panel of any previously defined aspect.

Some aspects and/or embodiments provide a control panel for use in an aquaculture system. The control panel comprises an input line, a plurality of output lines, a plurality of flow measurement components that include an orifice, and a plurality of flow adjustment components. Further, the flow measurement components measure the flowrate in the plurality of output lines using orifice differential pressures and the flow adjustment components adjust the flowrate in the plurality of output lines.

The control panel may also include a plurality of flow adjustment switches, a supply flow indicator, and an input line user flow adjustment component. The flow adjustment switches may enable on and off control of the outlet lines and the supply flow indicator may provide for a measurement of a pressure of a gas flowing through the inlet line. Further, the input line user flow adjustment component may enable control of a flow of a gas or fluid through the inlet line and, by extension, a flow of a gas or fluid through the outlet lines.

The control panel may also include a defog switch and a defogger. The defog switch and the defogger are designed to allow for an amount of a gas from the inlet line to bleed or escape through the defogger and into the control panel.

The flow measurement components may further include a dial and a flow measurement chart. The flow measurement components are designed to enable a user to determine accurate flowrates of the outlet lines at varying pressure conditions and, in particular, at varying inlet pressures. The flow measurement chart may be provided as a visual chart that is factory calibrated.

Further aspects and/or embodiments provide a method for measuring the flowrate of an outlet line from a control panel. The method comprises the steps of measuring a pressure of an inlet, measuring a first numerical value that corresponds to a flowrate of an outlet, and determining a flowrate of the outlet using the pressure of the inlet and the first numerical value.

Some aspects and/or embodiments are directed toward an aquaculture system. The system includes one or more pens, one or more compressors, a control site, and one or more control panels. The control panel may comprise a plurality of input lines connected to the one or more compressors, a plurality of output lines, a plurality of valves connected to the plurality of output lines, and one or more intermediate lines connected to the plurality of valves and configured to provide fluid communication between the plurality of input lines to diffuser platforms.

In some aspects and/or embodiments, a control panel for use in an aquaculture system is disclosed. The control panel comprises an input line, a plurality of outlet lines, one or more flow controls, and a plurality of flow indicators comprising an orifice and being configured to measure a flowrate from the control panel exiting the plurality of outlet lines. The plurality of flow controls are designed to measure the flowrate in the plurality of outlet lines using an orifice differential pressure and the plurality of flow indicators are designed to adjust the flowrate in the plurality of outlet lines.

In some aspects and/or embodiments, the control panel may also include control switches, flow indicators, and a supply indicator. The control panel may also include an input line user flow control, a defog switch, and a panel. The control panel may be connected to a plurality of compressors and configured to supply gas or fluid to the control panel. The plurality of compressors may comprise a regulator and an accumulator

In some aspects and/or embodiments, the control panel may also be connected to a plurality of valves. The plurality of valves are connected to one or more intermediate lines configured to provide fluid communication between input lines and diffuser platforms.

Further aspects and/or embodiments provide a method for measuring a flowrate of an outlet line from a control panel. The method including the steps of measuring a pressure of an inlet line, determining a measurement line that corresponds to the pressure of the inlet line, determining a dial number and a numerical line designated by reading a dial using an indicator, determining an intersection point of the numerical line and the measurement line, and determining a flowrate of the outlet line.

In some aspects and/or embodiments, the pressure may be about 50 psig. In some embodiments, the measurement line corresponds to a pressure of about 50 psig.

The method may further comprise extrapolating the determined numerical line of the dial, using an extrapolation, to determine the intersection point. The method may further comprise determining the band using the intersection point.

In some aspects and/or embodiments, the intersection of the numerical line and the measurement line is located between bands. A user differentiates the bands based on different color, texture, or general intensity.

Features which are described in the context of separate aspects and/or embodiments of the invention may be used together and/or be interchangeable. For example, features of the control panel of any of claims 2 to 8 may be interchangeable with or combinable with the control panel of the system of claim 1, and vice versa. Similarly, where features are, for brevity, described in the context of a single embodiment, these may also be provided separately or in any suitable sub-combination. Features described in connection with the device may have corresponding features definable with respect to the method(s), and vice versa, and these embodiments are specifically envisaged.

### DESCRIPTION OF THE DRAWINGS

FIG. 1 is a functional block diagram of an exemplary aquaculture system according to one embodiment that includes a plurality of pens and a control panel;
FIG. 2 is an isometric view of one of the pens of FIG. 1 according to one embodiment;
FIG. 3 is a functional block diagram of another exemplary aquaculture system according to another embodiment that includes the control panel;
FIG. 4 is a top, front, and right isometric view of one embodiment of a diffuser platform that may be used in the aquaculture systems of FIGS. 1-3;
FIG. 5 is a top, front, and right isometric view of another embodiment of a diffuser platform that may be used in the aquaculture systems of FIGS. 1-3;
FIG. 6 is a top, front, and right isometric view of another embodiment of a diffuser platform that may be used in the aquaculture systems of FIGS. 1-3;
FIG. 7 is a front elevational view of one embodiment of the control panel used in the aquaculture systems shown in FIGS. 1-3;
FIG. 8 is a portion of the front elevational view of a flow indicator of the control panel of FIG. 7, enlarged for magnification purposes;
FIG. 9 is a flow chart for an example methodology used to measure a flowrate of an outlet line of the control panel of FIG. 7;
FIG. 10 is a front elevational view of another embodiment of the control panel used in the aquaculture systems shown in FIGS. 1-3;
FIG. 11 is a portion of the front elevational view of a flow indicator of the control panel of FIG. 10, enlarged for magnification purposes; and
FIG. 12 is another portion of the front elevational view of a flow map of the control panel of FIG. 10, enlarged for magnification purposes.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

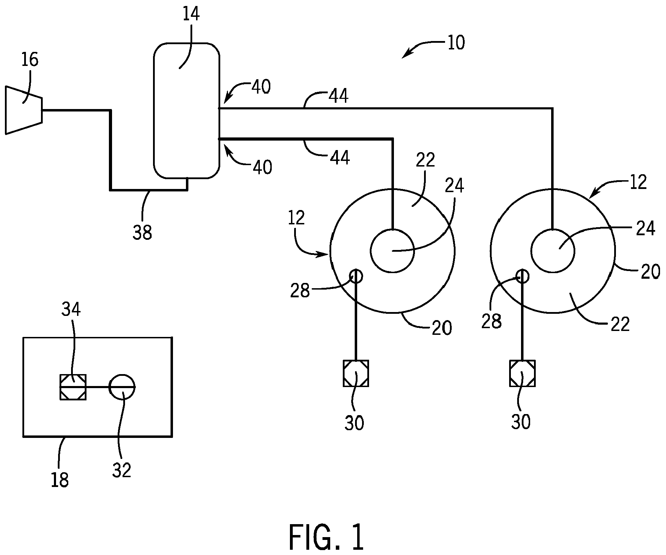

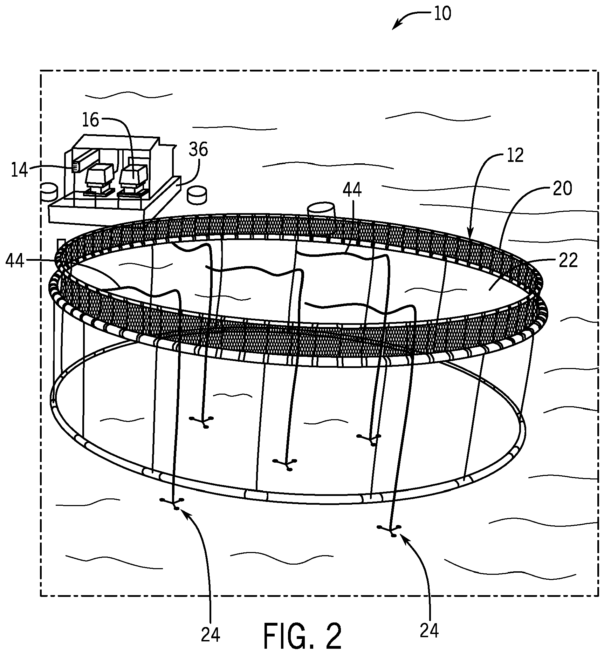

FIGS. 1 and 2 illustrate an aquaculture system 10 according to one embodiment. The aquaculture system 10 may include one or more pens 12, one or more flow control panels 14, one or more compressors 16, and a remote control site 18. The pens 12 may be defined by a barrier 20 that creates a holding zone 22. The barrier 20 may be provided by a variety of structures or materials and may be dependent upon the location of the pen 12. For example, when the pens 12 are provided on land, the barrier 20 may be provided as a solid material, e.g., a solid plastic structure, or any material capable of containing water or liquid. Alternatively, when the pens 12 are provided in water, e.g., a lake or an ocean, the barrier 20 may be provided as a net (as shown in FIG. 2), a solid material, or any material capable of containing the aquatic organisms within the holding zone 22.

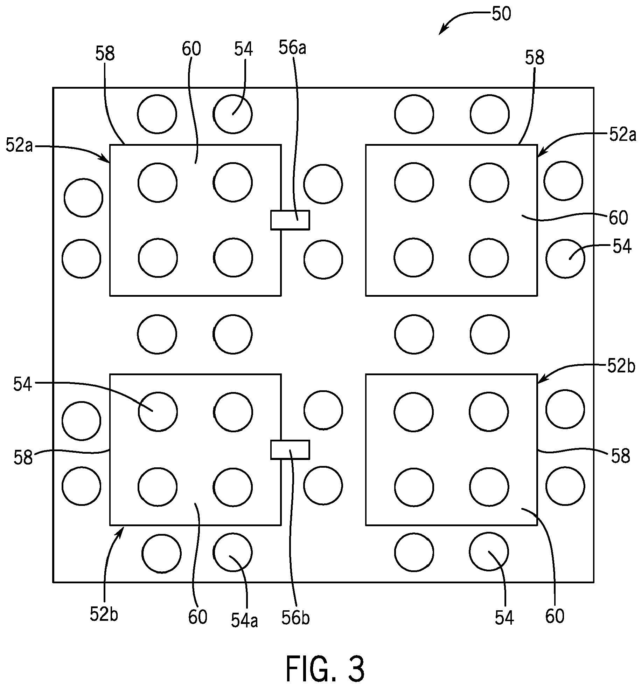

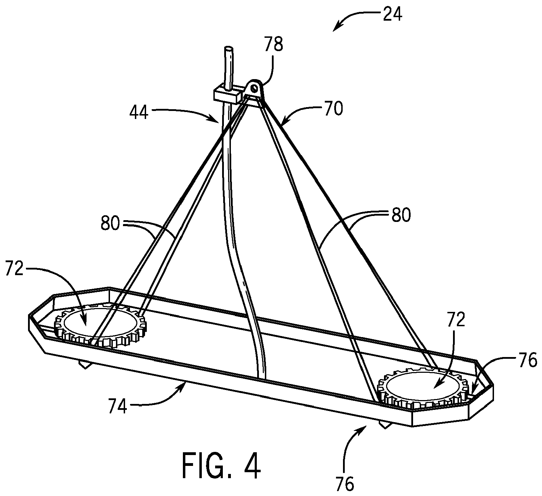

The pens 12 may also include a one or more diffuser platforms 24 located within the holding zone 22. The diffuser platforms 24 may also be located around the barrier 20 and outside of the holding zone 22, as shown in FIG. 3. For example, when the pen 12 is located in a body of water, the diffuser platforms 24 may be located around the barrier 20 and outside of the holding zone 22 to provide any necessary gas or aeration to the pen 12. Further, in the embodiment shown in FIG. 1, the pens 12 include a single diffuser platform 24, however, in other embodiments a plurality of diffuser platforms 24 may be provided. Generally, the diffuser platforms 24 may include a plurality of diffusers, e.g., a plurality of diffuser disks 26 (see FIGS. 4-6), which are discussed in more detail below.

The operating conditions of the pen 12 may be controlled using a plurality of control elements and/or controllers. In the particular embodiment shown in FIG. 1, the aquaculture system 10 includes the flow control panel 14, a plurality of measurement devices 28, a data output device 30, a receiver 32, and a computer 34. The plurality of measurement devices 28 may be connected to the data output device 30 and may provide data corresponding to the operating conditions of the pen 12. In particular, the plurality of measurement devices 28 may measure one or more parameters associated with the pen 12, such as, for example, a temperature, a pH, an algae concentration, a dissolved oxygen concentration, or any other gas or impurity concentration within the pen 12 and may send the measurements to the data output device 30. Upon reception of data from the measurement devices 28, the data output device 30 may transmit the data to the receiver 32 and, by extension, to the computer 34. The data output device 30 may transmit the data to the receiver 32 using a radio link, wireless connection, or other remote communication protocol. The receiver 32 and the computer 34 may be located at the remote control site 18, such as in an office or a control room.

The flow control panel 14 may be located remotely or on-site with respect to the aquaculture system 10. As shown in FIGS. 1 and 2, the flow control panel 14 may be provided on a barge 36 (see FIG. 2) located in close proximity to the pens 12 or, in other embodiments, may be located on the barrier 20 of the pens 12. The flow control panel 14 may include an input line 38 that provides gas or fluid to the flow control panel 14 and a plurality of outlet lines 40 that provide gas or fluid from the flow control panel 14. The input lines 38 and/or the outlet lines 40 may, individually, comprise of a hose, a tube, a pipeline, or the like. In some embodiments, the input line 38 and the outlet lines 40 are provided as approximately 1 inch diameter hoses.

The input line 38 may be further connected to one or more compressors 16 which supply gas or fluid to the flow control panel 14 and, by extension, to the pens 12 through the outlet lines 40. In this particular embodiment, the flow control panel 14 includes a single input line, however, in other embodiments, a plurality of input lines may be provided. As such, a plurality of compressors may also be provided in the aquaculture system 10. Further, the compressor 16 may also include a regulator and an accumulator (not shown).

The outlet lines 40 may also be connected to a plurality of valves, which may be adjusted to control the rate of fluid or air flow through the outlet lines 40. The valves may then be connected to one or more intermediate lines 44, which provide fluid communication for the gas or fluid to travel from the input lines 38 or the flow control panel 14 to the diffuser platforms 24.

FIG. 3 illustrates an aquaculture system 50 according to another embodiment. The aquaculture system 50 may include a plurality of rectangular pens 52a, 52b with a plurality of diffuser platforms 54 positioned around and/or within the rectangular pens 52. The aquaculture system 50 may also include a plurality of flow control panels 56a, 56b. The rectangular pens 52 are each generally defined by one or more barriers 58 that are arranged to create a holding zone 60. In this particular embodiment, the flow control panel 56a controls an amount of gas or fluid to the rectangular pens 52a and the flow control panel 56b controls an amount of gas or fluid to the rectangular pens 52b.

FIG. 4 depicts one embodiment of the diffuser platform 24. In this particular embodiment, the diffuser platform 24 includes a hanger assembly 70, a plurality of diffusers 72, an exterior barrier 74, and an anode (not shown). In particular embodiments, the anode is provided as a sacrificial anode. The exterior barrier 74 may be connected to a plurality of disk supports 76 that allow for the placement and connection of the diffusers 72. The disk supports 76 are designed to support the diffusers 72 and prevent the overtightening or breakage of the diffusers 72. Further, the exterior barrier 74 is connected to the hanger assembly 70. The hanger assembly 70 generally includes a hanger 78 and a plurality of support lines 80 extending from the hanger 78. As shown in FIG. 4, the hanger 78 may be further connected to the intermediate line 44. Further, the hanger 78 may be connected to a rope or wire (not shown) to allow for suspension and placement in the water.

In some embodiments, the diffuser platform 24 is built using material to allow for the diffuser platform 24 to have a negative buoyancy, thereby allowing the diffuser platform 24 to sink when placed in water. The exterior barrier 74, the plurality of disk supports 76, and/or other portions of the diffuser platform 24 may be constructed from a metal, for example, from a rugged stainless steel material.

The diffusers 72 may be connected to the intermediate line 44. Further, the diffusers 72 include a plurality of apertures that allow for the exit of gas or fluid. During operation, the diffusers 72 may allow for gas or fluid, e.g., air or oxygen, to rise in the form of a plurality of bubbles and may cause an upwelling flow pattern within the pen 12. The upwelling flow pattern may carry deeper, better quality water to the pen 12, along with allowing for the water within the pen 12 to be mixed. Further, the flow dynamics caused at the surface of the pen 12 may create outward velocity or flow which slows the ingress of poor quality water to the pen 12. The contact of the rising bubbles and the water within the pen 12 also may aerate the water, which increases the dissolved oxygen levels within the pen 12. Such aeration may help resolve many issues related to toxic plankton blooms, low dissolved oxygen events, sea lice, and/or temperature stratification.

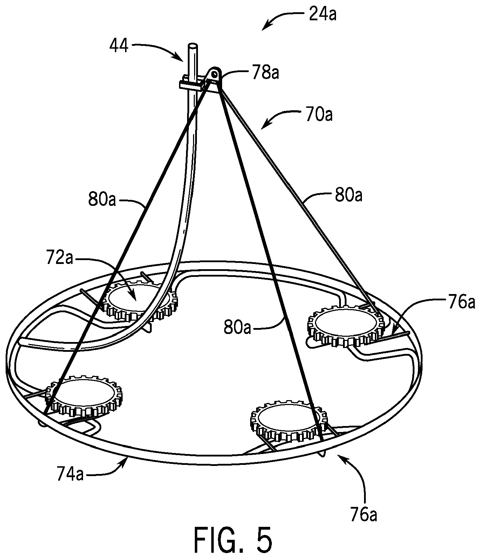

FIG. 5 depicts another embodiment of a diffuser platform 24a. In this particular embodiment, the diffuser platform 24a may include a plurality of diffusers 72a, a hanger assembly 70a including a hanger 78a and a plurality of support lines 80a, an exterior barrier 74a, a plurality of disk supports 76a, and an anode (not shown). Similar to the diffuser platform 24, the diffuser platform 24a may be connected to the intermediate line 44. Further, the diffuser platform 24a functions in a substantially similar manner to that of the diffuser platform 24 depicted in FIG. 4.

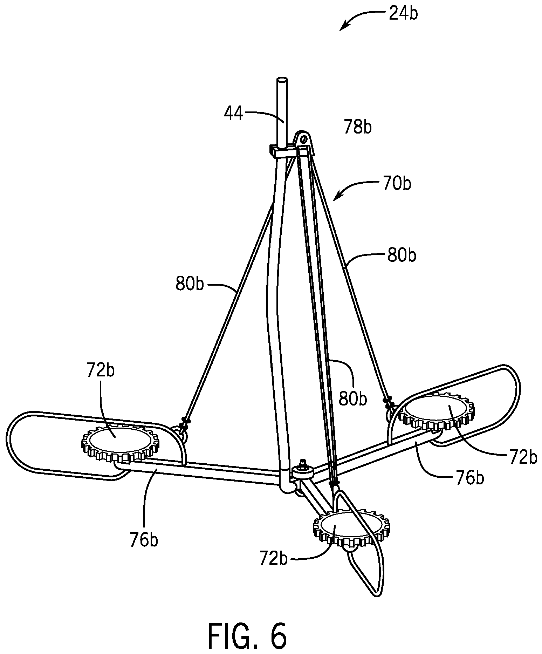

FIG. 6 depicts yet another embodiment of a diffuser platform 24b. In this particular embodiment, the diffuser platform 24b may include a plurality of diffusers 72b, a hanger assembly 70b including a hanger 78b and a plurality of support lines 80b, a plurality of disk supports 76b, and an anode (not shown). Similar to the diffuser platform 24, the diffuser platform 24b may be connected to the intermediate line 44. Further, the diffuser platform 24b functions in a substantially similar manner to that of the diffuser platform 24 depicted in FIG. 4.

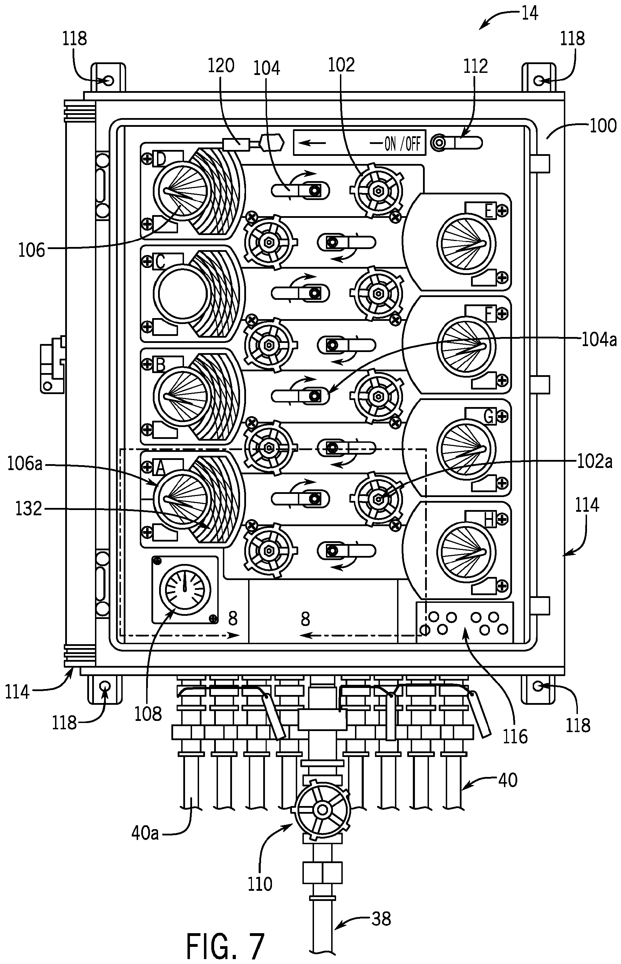

FIG. 7 depicts one embodiment of the flow control panel 14 that is designed to be utilized in conjunction with a SPA or SPO system. The flow control panel 14 is provided within an enclosure 100 and includes the input line 38 and the outlet lines 40. Further, the flow control panel 14 may include one or more user flow controls 102, user control switches 104, flow indicators 106, and a supply flow indicator 108. The flow control panel 14 may also include an input line user flow control 110, a defog switch 112, a panel 114, and a map 116.

The enclosure 100 of the flow control panel 14 may be provided as a fiberglass structure and, in particular embodiments, may be provided as a type 4x fiberglass enclosure. The enclosure 100 may also include a window, door, or other selectively openable surface that allows the interior of the flow control panel 14 to be protected, while still allowing a user to view and adjust the various flow controls 102 and/or user control switches 104. In particular embodiments, the window may be provided as a clear polycarbonate window with UV inhibitors. The enclosure 100 is designed to provide improved protection of the flow control panel 14 from external elements, e.g., water, rain, hail, etc.

The flow control panel 14 may be placed on a wall of a structure or may be supported by a stand. As shown in FIG. 7, the enclosure 100 may include a plurality of apertures 118 that may allow for the enclosure 100 and the flow control panel 14 to be mounted on a planar surface, e.g., a wall. In some embodiments, the flow control panel 14 includes a stand that may be bolted onto a walkway. In particular embodiments, the stand may be galvanized.

As will be further discussed below, the plurality of flow indicators 106 are designed to measure the flow of a gas or a fluid from the flow control panel 14, exiting through the outlet lines 40, and to the individual diffuser platforms 24. Therefore, each flow indicator 106 may correspond to a particular outlet line 40 and a particular diffuser platform 24, and provides for the measurement of flow to each platform 24. Further, the plurality of user flow controls 102 and the plurality of user control switches 104 may be used to control the flow or the amount of gas or fluid into the respective outlet line 40 and, by extension, to the respective diffuser platform 24. As such, each user flow control 102 and each user control switch 104 also may correspond to a particular outlet line 40 and a particular diffuser platform 24. For example, the flow of gas or fluid in an outlet line 40a and to a diffuser platform 54a (see FIG. 3) may be measured using a flow indicator 106a, and may be altered using a user flow control 102a and/or a user control switch 104a. In particular embodiments, the flow control panel 14 includes the map 116 to help a user determine which of the user flow controls 102, user control switches 104, and/or flow indicators 106 correspond to the respective outlet lines 40.

The user flow controls 102 may be used to regulate the flowrate of gas or fluid to and within the respective outlet line 40. For example, the user flow control 102 may increase a flow to the respective outlet line 40 by rotation of the user flow control 102 in a counterclockwise direction and may decrease a flow to the respective outlet line 40 by rotation of the user flow control 102 in a clockwise direction. In particular embodiments, each user flow control 102 may include an internal globe valve that is controlled by rotation of the user flow controls 102. Alternative embodiments of the user flow controls 102 may use a butterfly valve, a diaphragm valve, a needle valve, a pinch valve, or the like.

Further, the flow control panel 14 may also include the input line user flow control 110. The input line user flow control 110 may allow for panel-wide flow adjustments, i.e., flow adjustments to all of the outlet lines 40. For example, when the flow control panel 14 includes the enclosure 100 including a window and/or the panel 114, panel-wide flow adjustments may be made without opening the window or the panel 114 by using the input line user flow control 110. The input line user flow control 110 may also reduce the labor of operating the flow control panel 14 by allowing for panel-wide flow adjustments without the need to re-balance any of the outlet lines 40 using the user flow controls 102 individually. In particular embodiments, the input line user flow control 110 may include an internal globe valve, a butterfly valve, a diaphragm valve, a needle valve, a pinch valve, or the like.

The user control switches 104 may be used for on/off control of the flow of gas or fluid within the respective outlet line 40. The user control switches 104 may also allow for the flow of gas or fluid within a particular outlet line 40 to be turned on or off, without the need to rebalance the flow of gas or fluid through the aquaculture systems 10, 50. For example, when the user control switch 104 is in an on or open position (as shown in FIG. 7), a user may rotate the user control switches 104 in clockwise direction, approximately 90°, to switch the user control switch 104 into an off or closed position. As such, a flow of a gas or fluid ceases to flow through the respective outlet line 40. Afterwards, a flow of a gas or fluid may continue to flow through the outlet line 40 upon rotation of the user control switch in a 90° counterclockwise rotation. In particular embodiments, the user control switches 104 may include a ball valve. Alternative embodiments of the user control switch 104 may include a gate valve, a plug valve, or the like.

The flow control panel 14 optionally includes the defog switch 112. In particular embodiments, the defog switch 112 may be used to control a flow of gas from a defogger 120. The defog switch 112 may be provided as an on/off switch and includes a ball valve (not shown) utilized during operation. Alternative embodiments of the defog switch 112 may include other valves, for example, a needle valve, a gate valve, a plug valve, or the like. The defog switch 112 and, by extension, the defogger 120 may provide an internal air bleed line to the gas entering the flow control panel 14 through the inlet line 38. The defogger 120 may allow for a gas, e.g., air or oxygen, to enter an interior of the flow control panel 14 and, as a result, may provide for a dry panel interior and may reduce an amount of fog on the panel window.

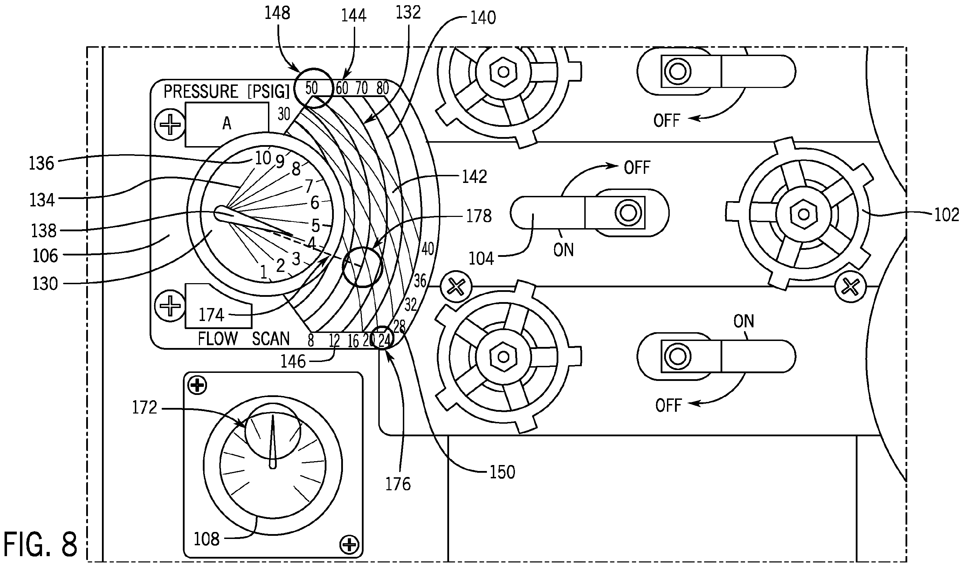

FIG. 8 illustrates the flow indicator 106 and the supply flow indicator 108 of the flow control panel 14. The flow indicator 106 may include a dial 130 and a flow measurement chart 132. The dial 130 may include a plurality of numerical lines 134, each having a dial number 136, and an indicator 138. The flow indicator 106 and/or the supply flow indicator 108 may also include an orifice or orifice plate (not shown). The orifice or orifice plate may be used to determine a differential pressure measurement of a flowrate in the outlet lines 40 and/or the inlet lines 38. In these embodiments, the orifice or orifice plate may eliminate an impact of condensation that may build up or accumulate within the flow control panel 14, the outlet lines 40, and/or the inlet line 38. The accumulation of condensation may cause undesired sticking and inaccurate measurements in traditional flow measurement devices, e.g., a rotameter. The use of orifice or orifice plates within the flow control panel 14 may also eliminate or decrease a need for cleaning the internal components of the flow control panel 14 or associated components.

The flow measurement chart 132 may be provided as a visual chart and, in particular, a visual chart that is factory calibrated. The flow measurement chart 132 may include a plurality of measurement lines 140 and a plurality of bands 142. In this embodiment, the measurement lines 140 and the bands 142 generally extend from a top end 144 of the flow measurement chart 132 and terminate adjacent a bottom end 146 of the flow measurement chart 132. Further, the top end 144 of the flow measurement chart 132 may include a first set of numerals 148 and the bottom end 146 of the flow measurement chart 132 may include a second set of numerals 150. The first set of numerals 148 are designed to be indicative of a pressure of the inlet line 38 and the second set of numerals are designed to be indicative of a flow of a gas or fluid within an outlet line 40.

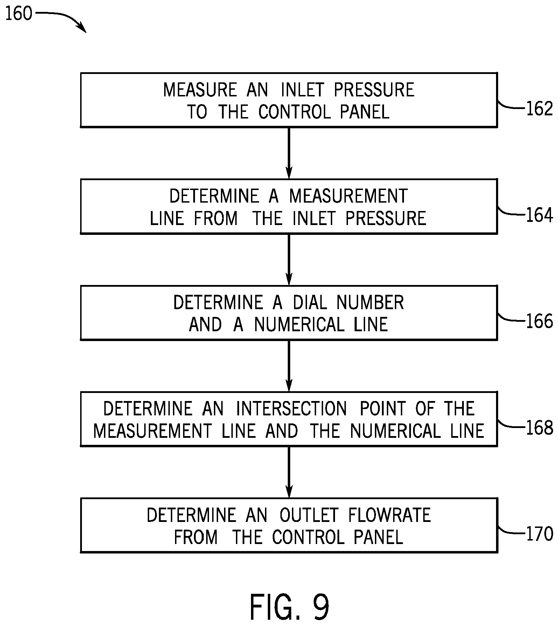

FIG. 9 depicts a flow chart for a process or method 160 used to measure a flowrate of an outlet line 40 of the flow control panel 14 that uses the flow indicator 106. The method 160 generally includes steps 162, 164, 166, 168, and 170. In step 162, a user may first measure an inlet pressure 172 (see FIG. 8) of the inlet line 38 using the supply flow indicator 108. For example, in the particular embodiment shown in FIG. 8, the supply flow indicator 108 reads an approximate inlet pressure 172 of 50 psig. Next, in step 164, a user may use the inlet pressure 172 of the inlet line 38 determined in step 162 to determine or choose one of the measurement lines 140 that corresponds to the inlet pressure 172 of the inlet line 38. For example, in the particular embodiment of FIG. 8, a user may select the measurement line 140 labeled by the numeral 148 that corresponds to an inlet pressure of 50 psig.

In step 166, a user may then read the dial 130 using the indicator 138 to determine a dial numeral 136 that is designated by the indicator 138. For example, in the particular embodiment shown in FIG. 8, the indicator 138 approximately indicates a dial numeral 136 of 4. After determining the dial numeral 136, a user may use the numerical line 134 corresponding to the determined dial numeral 136 to determine an intersection point of the numerical line 134 and the measurement line 140 determined from step 164. For instance, a user may generally extrapolate the determined numerical line 134 of the dial 130, using an extrapolation line 174 (see FIG. 8) to determine an intersection point. For the particular embodiment shown in FIG. 8, the extrapolation line 174 creates an intersection point 176 with the measurement line 140 that corresponds to an inlet pressure of 50 psig.

In most embodiments, the intersection point of the numerical line 134 of the dial 130 and the measurement line 140 is located within one of the bands 142. Further, the bands 142 may be different in color, shading, texture, general intensity, etc. Therefore, a user may easily be able to differentiate the bands 142 with respect to one another. In step 170, a user may determine an outlet flowrate of the outlet line 40 that corresponds to the flow indicator 106 being measured using the bands 142. In particular, a user may determine a band 142 using the location of the intersection point 176 determined in step 168 and follow the band 142 to a terminal end 178 on the bottom end 146 of the flow measurement chart 132. In particular embodiments, a user may also follow the approximate location of the intersection point 176 within the band 142 to the terminal end 178. The terminal end 178 may generally end adjacent one of the second numerals 150. For example, for the particular embodiment of FIG. 8, a user may follow the band 142 to the terminal end 178 of the band 142. Further, in this embodiment, a user may then use the approximate location of the intersection point 176 to determine an approximate terminal end 178. In this example, the terminal end 178 corresponds to the second numeral 150 of 24, which is indicative of a flowrate of 24 standard cubic feet per minute ("SCFM").

The flow indictors 106 and the method 160 allow for the accurate measurement of a flowrate of the outlet lines 40 at varying supply pressures. Therefore, the flow indicators 106 may allow for the accurate determination of the flowrate to the outlet lines 40 under varying pressure conditions.

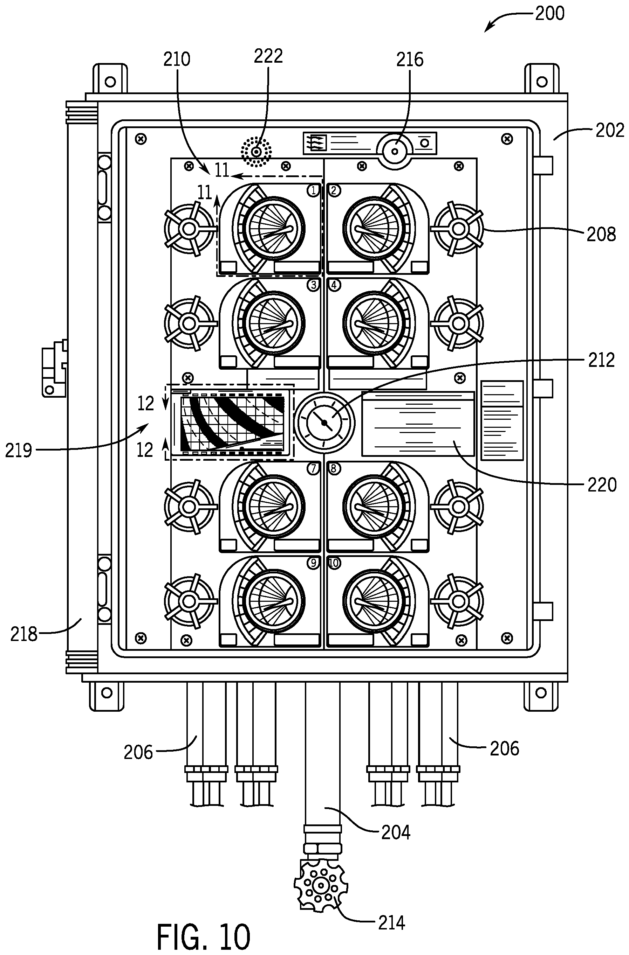

FIG. 10 depicts another embodiment of a flow control panel 200 that is designed to be utilized in conjunction with a SPA or SPO system. The flow control panel 200 may be provided within an enclosure 202 and includes one or more input lines 204 and one or more outlet lines 206. Further, the flow control panel 200 may include one or more user flow controls 208, flow indicators 210, and a supply flow indicator 212. The flow control panel 200 may also include an input line user flow control 214, a defog dial 216, a panel 218, a flow map 219, and a set of instructions 220.

The enclosure 202 of the flow control panel 200 may be provided as a fiberglass structure and, in particular embodiments, may be provided as a type 4x fiberglass enclosure similar to the enclosure 100.

As will be further discussed below, the plurality of flow indicators 210 are designed to measure the flow of a gas or a fluid from the flow control panel 200, exiting through the outlet lines 206, and to the individual diffuser platforms 24. Therefore, each flow indicator 210 may correspond to a particular outlet line 206 and a particular diffuser platform 24, and provides for the measurement of flow to each platform 24.

In this embodiment, the user flow controls 208 may be used to regulate the flowrate of gas or fluid to and within the respective outlet line 206. For example, the user flow control 208 may increase a flow to the respective outlet line 206 by rotation of the user flow controls 208 in a counterclockwise direction and may decrease a flow to the respective outlet line 206 by rotation of the user flow controls 208 in a clockwise direction.

Further, as previously noted above, the flow control panel 200 may also include the input line user flow control 214. The input line user flow control 214 may allow for panel-wide flow adjustments, i.e., flow adjustments to all of the outlet lines 206. For example, when the flow control panel 200 includes the enclosure 202 including a window and/or the panel 218, panel-wide flow adjustments may be made without opening the window or the panel 218 by using the input line user flow control 214.

The flow control panel 200 may also optionally include the defog dial 216. In particular embodiments, the defog dial 216 may be used to control a flow of gas from a defogger 222. As shown in FIG. 10, the defog dial 216 may be provided as a rotational dial. The defog dial 216 and, by extension, the defogger 222 may provide an internal air bleed line to the gas entering the flow control panel 200 through the inlet line 214. The defogger 222 may allow for a gas, e.g., air or oxygen, to enter an interior of the flow control panel 200 and, as a result, may provide for a dry panel interior and may reduce an amount of fog on the panel window.

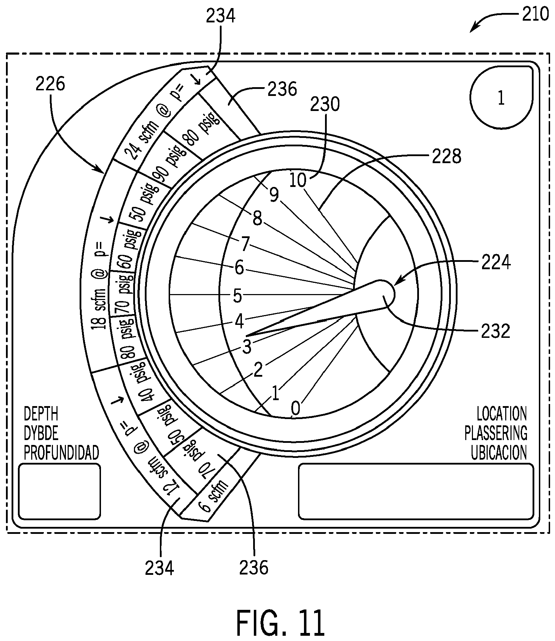

FIG. 11 illustrates the flow indicator 210 of the flow control panel 200. The flow indicator 210 may include a dial 224 and a flow measurement chart 226. The dial 224 may include a plurality of numerical lines 228, each having a dial number 230, and an indicator 232. The flow indicator 210 and/or the supply flow indicator 212 may also include an orifice or orifice plate (not shown). The orifice or orifice plate may be used to determine a differential pressure measurement of a flowrate in the outlet lines 206 and/or the inlet lines 204. As previously discussed above, in these embodiments, the orifice or orifice plate may eliminate an impact of condensation that may build up or accumulate within the flow control panel 200, the outlet lines 206, and/or the inlet line 204.

In this embodiment, the flow measurement chart 226 may be provided as a visual chart and, in particular, a visual chart that is factory calibrated. The flow measurement chart 226 may include a plurality of measurement zones 234 and a plurality of bands 236 within the measurement zones 234. In this embodiment, the measurement zones 234 may be different in color, shading, texture, general intensity, etc. Therefore, a user may easily and quickly be able to differentiate the measurement zones 234 with respect to one another. Further, in this embodiment, the measurement zones 234 may correspond to the flow rate of the output lines 206 and the bands 236 may allow a user to determine if the measured flow rate of the output lines 206 need to be calibrated.

For example, a user may first determine a pressure of the inlet line 204 using the supply flow indicator 212. After doing so, a user may determine if the indicator 232 generally points to a band 236 that matches the pressure determined from the supply flow indicator 212. If the band 236 matches the pressure determined from the supply flow indicator 212, a user may accurately determine a flowrate of the output lines 236 using the measurement zones 234. However, as will be further discussed below, if the band 236 does not match the pressure determined from the supply flow indicator 212, a user may use the flow map 219 to determine an accurate flowrate of the output lines 206.

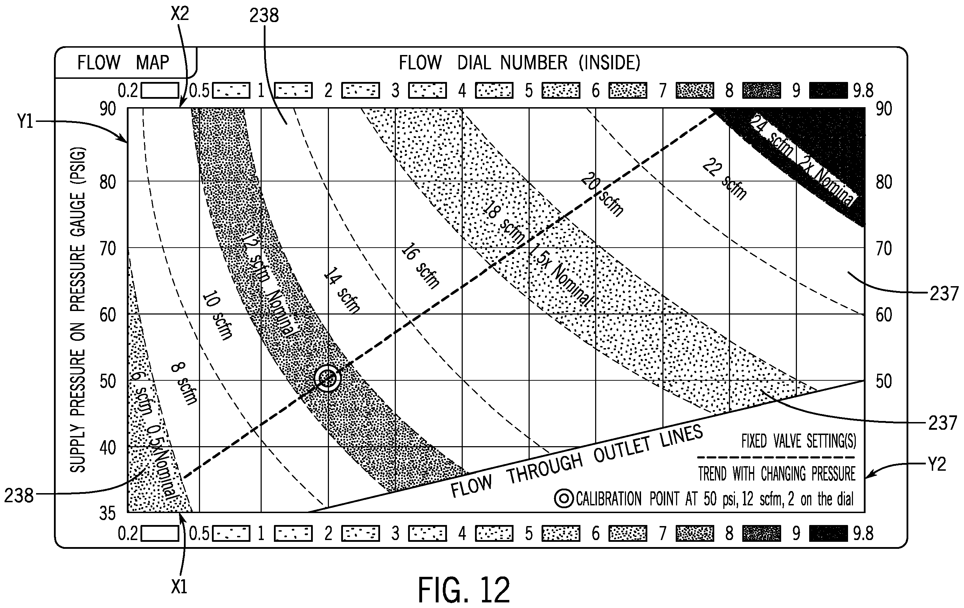

FIG. 12 depicts a flow map 219 of the flow control panel 200. In particular, the flow map 219 may be used in conjunction with the supply flow indicator 212 and the flow indicator 210 to determine a flow rate of an output line 206. In this embodiment, the flow map 219 generally includes a first x-axis XI, a second x-axis X2, a first y-axis Y1, and a second y-axis Y2. The first x-axis X1 and the second x-axis X2 may correspond to the dial number 230 or a numerical line 228 indicated by the indicator 232 of the dial 224. Further, the first y-axis Y1 and the second y-axis Y2 may correspond to a supply pressure determined from the supply flow indicator 212. The flow map 219 may further include a plurality of bands 237 that may correspond to a flowrate of one or more output lines 206.

During use of the flow map 219, a user may determine an intersection point of a measured dial number 230 and a measured supply pressure from the supply flow indicator 212 using a plurality of grid lines 238. After doing so, a user may determine which of the bands 237 the intersection point lies within and, as a result, a user may determine a flowrate of an output line 206. For example, if the indicator 232 indicated a dial number 230 of 2 and the supply flow indicator 212 indicated a supply pressure of 50, a user may determine an intersection point using the grid lines 238. Then a user may determine that the intersection point lies within the band 237 that correspond to a flowrate of approximately 12 standard cubic feet per minute.

The flow indictors 210 and the flow map 219 allow for the accurate measurement of a flowrate of the outlet lines 206 at varying supply pressures. Therefore, the flow indicators 210 and the flow map 219 may allow for the accurate determination of the flowrate to the outlet lines 206 under varying pressure conditions.

Although the flow control panels 14, 200 have been discussed with respect to an aquaculture system or application, it should be appreciated that the flow control panels 14, 200 and/or any associated parts may be used in other applications that aim to accurately control the flowrate of gases or fluids to a system and/or from a system.

It will be appreciated by those skilled in the art that while the invention has been described above in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

## Claims

1. An aquaculture system (10), the system comprising;
one or more pens (12);
one or more compressors (16);
a control site (18); and
one or more flow control panels (14) comprising:
an input line (38) connected to the one or more compressors (16);
a plurality of output lines (40);
a plurality of valves connected to the plurality of output lines (40); and
one or more intermediate lines (44) connected to the plurality of valves and configured to provide fluid communication between the input line (38) to diffuser platforms (24).

2. A control panel (14) for use in an aquaculture system (10), the control panel (14) comprising;
an input line (38);
a plurality of output lines (40);
one or more user flow controls (102); and
a plurality of flow indicators (106) comprising an orifice and configured to measure a flowrate from the control panel (14), exiting the plurality of output lines (40), using an orifice differential pressure and the plurality of flow indicators (106) being designed to adjust the flowrate in the plurality of output lines (40).

3. The control panel of claim 2, further comprising control switches (104) and a supply indicator (108).

4. The control panel of claim 2 or 3, further comprising an input line user flow control (110), a defog switch (112), and a panel (114).

5. The control panel of claim 2, claim 3 or claim 4, wherein the control panel (14) may be connected to a plurality of compressors (16) configured to supply gas or fluid to the control panel (14).

6. The control panel of claim 5, wherein the plurality of compressors (16) each comprise a regulator and an accumulator.

7. The control panel of claim 2 or of any of claims 2 to 6, wherein the outlet lines (40) are connected to a plurality of valves.

8. The control panel of claim 7, wherein the plurality of valves are connected to one or more intermediate lines (44) and configured to provide fluid communication between the input lines (38) and diffuser platforms (24).

9. A method for measuring a flowrate of an outlet line (40) from a control panel (14), the method comprising the steps of:
measuring a pressure (172) of an inlet line (38);
determining a measurement line (140) that corresponds to the pressure (172) of the inlet line (38);
determining a dial number (136) and a numerical line (134) designated by reading a dial (130) using an indicator (138);
determining an intersection point of the numerical line (134) and the measurement line (140); and
determining a flowrate of the outlet line (40).

10. The method according to claim 9, wherein the pressure (172) is about 50 psig.

11. The method of claim 9 or calim 10, wherein the measurement line (140) corresponds to a pressure of about 50 psig.

12. The method of claim 9, claim 10 or claim 11, further comprising extrapolating the determined numerical line (134) of the dial (130), using an extrapolation (174) to determine the intersection point.

13. The method of claim 9 or of any of claims 10 to 12, wherein the intersection of the numerical line (134) and the measurement line (140) is located between bands (142).

14. The method of claim 13, wherein a user differentiates the bands (142) based on different color, texture, or general intensity.

15. The method of claim 13 or claim 14, further comprising determining the band (142) using the intersection point (176).
